# EUROPEAN PATENT SPECIFICATION

(11) **EP 2 366 566 B1**
(45) Date of publication and mention of the grant of the patent: **19.09.2012**
(21) Application number: 11155977.9
(22) Date of filing: 25.02.2011
(51) Int. Cl.: B60G 5/03, B60G 9/00, B60G 11/04, B60G 11/107, B60G 5/053, B62D 7/14

(54) **A vehicle with a steerable, spring-mounted rigid wheel axle**
Fahrzeug mit einer lenkbaren gefederten Starrachse
Véhicule avec un essieu rigide dirigeable suspendu à ressort

(30) Priority: 16.03.2010 NL 2004403
(43) Date of publication of application: 21.09.2011
(73) Proprietor: Bart Veldhuizen B.V., 3737 BA Groenekan (NL)
(72) Inventor: Veldhuizen, Pieter Gerrit, 3737 BA, Groenekan (NL)
(74) Representative: Klavers, Cornelis

(56) References cited:
- DE-C- 928 691
- DE-U1- 9 420 801
- JP-A- 59 040 910
- US-A- 1 935 746
- US-A- 3 591 203
- US-A- 5 046 756
- US-A- 6 039 133

## Description

The present invention relates to a vehicle comprising a chassis and a suspension by means of which at least one rigid wheel axle is spring-mounted to the chassis, being capable of spring movement in the vertical direction by being suspended to the chassis of the vehicle, said suspension comprises at least one leaf spring, which leaf spring is supported by the wheel axle in a manner in which the wheel axle is movable in a direction transversely to the longitudinal direction of the wheel axle, in the horizontal plane, relative to the leaf spring.

Such a suspension is generally known, it is usually used with trucks that are suitable for transporting large loads, more in particular with trucks whose rear wheels are mounted on so-called tandem axles, i.e. two wheel axles arranged one behind the other. If one of the two tandem axles of such a truck is a steerable axle, this will lead to an improved road-holding and steerability of the vehicle and to less tyre wear, in both cases in particular on rough terrain.

The steering motion of the wheel axle is made possible by movement thereof relative to the leaf spring, for example by a sliding movement. The typical advantages of non-steering wheel axles provided with leaf springs, viz. usability also in the case of large to very large loads and only a low maintenance requirement, for example in comparison with hydraulic shock absorbers, are obtained as well, in this case, however, in combination with steerability of the wheel axle.

The German patent document DE 928 691 discloses a double axle arrangement with axles that adjust themselves autonomously to the curve in mutual dependency, wherein the leaf springs on the axles mutually interact with the aid of guiding parts, and a playless movement of the spring packets is obtained by means of the arrangements and design of the guiding parts.

The American patent document US 1.935.746 discloses a multi-wheel vehicle with a frame, a pair of closely spaced tandem axles disposed beneath one end of the frame; means for supporting each side of the frame upon the axles comprising flexible suspensions including load-supporting means universally connected to said axles by means yieldingly resisting endwise axle movement, whereby said axles may be forced to partake of a limited lateral movement with respect to said frame; means substantially rigid with respect to one of said tandem axles and projecting toward said frame; means adjustably connecting the free end of said substantially rigid means to said frame; and a device for shifting said adjustable means. This provides a simple and properly controlled steering means for association with tandem axles that are supported by non-dirigible wheels.

The German utility patent G 94 20 801 U1 discloses an axle arrangement for the rear axle of trucks, with a leaf spring, in which the leaf spring is fixedly connected to the frame at at least one location (chassis-location), at least a further, oppositely remote location of the leaf spring a steered, unbendable axle is attached, in which en essentially vertically arranged swing-support is arranged between the body of the axle and the swing-axle-location, in which the swing-axle-location is higher than the chassis-location. This makes it possible to make only one of the axles steerable, in a limited way, as opposed to both axles.

The United States Patent 6.039.133 discloses an articulating work machine comprising a frame assembly having a first and a second frame structure each supporting a set of wheels, the first frame structure being pivotally secured to the second frame structure, two fluid cylinders are provided, each with a first end secured to the first frame structure and a second end secured to the second frame structure, a fluid-powered differential secured to the second frame-structure and a steering control circuit and an articulated angle sensor operatively coupled to the pivot point and steering control circuit. The fluid cylinders are pressurized via fluid lines in such a manner that they cooperate so as to steer the articulating work machine; when one cylinder is pressurized to assume the extended orientation, the other is controlled to retract.

A drawback of the arrangements as described above is that the known constructions are either steerable in a very limited sense (US 1.935.746 and G 94 20 801 U1) or not very compact.

The object of the present invention is to provide a vehicle as described in the introduction which is both steerable in a high degree and yet compact.

This objective is accomplished by a vehicle having the features defined in claim 1.

Due to the fact that the leaf spring comprises a part in the form of a curved circular segment having a centre that is located at or near the middle of the wheel axle, it becomes possible to mount the wheels closer to the leaf springs, which has a positive effect on the transverse stability of the vehicle near the steering wheel axle in question. Moreover, the leaf springs may be compact.

One embodiment of the vehicle is characterised in that the leaf spring is mounted for free spring movement at one of its ends, where it is supported by the wheel axle. This embodiment makes it possible to realise an even simpler construction of the vehicle, because the fixed part of the chassis needs to be present only on one side of the leaf spring, in other words, need not extend on both sides of the leaf spring. In addition, the construction of the vehicle can be lighter in weight, which leads to a lower fuel consumption of the vehicle and which has a favourable effect on the driving characteristics.

In another embodiment, said centre at or near the middle of the wheel axle is located in front of the wheel axle, seen in the usual direction of movement of the vehicle. Such a staggered arrangement is a manner known in the art of obtaining a better, because smoother and more stable, driving behaviour of the wheel axle.

Yet another embodiment is obtained if the wheel suspension comprises guide means that prevent the wheel axle from moving in its longitudinal direction relative to the circular segments. The leaf springs thus also absorb transverse forces in all steering positions, which combination of spring function and guiding function obviate the need for such transverse guidance elsewhere, for example at a usual position near the middle of the wheel axle. As a result, a further simplified construction can be realised and/or less space is taken up.

In another embodiment, the movement of the wheel axle relative to at least one leaf spring is borne by at least one rotatably disposed roller, which forms part of the suspension. In particular in the case of heavily loaded leaf springs, as in trucks for heavy transport, a roller is a guide means for relative movement between the leaf spring and the wheel axle which exhibits less friction and which, as a result, is less susceptible to wear and, in addition, provides a better steering action.

Preferably, the suspension is constructed to fix the centre of the steering movement of the wheel axle in the longitudinal direction of the vehicle. The latter has the advantage that, in combination with the aforesaid circular segments, a relatively simple construction has been made possible having a clearly defined centre of rotation.

In one embodiment of the invention, the suspension may comprise a pair of double-acting hydraulic cylinders, which are symmetrically disposed on either side of the longitudinal axis of the vehicle and which are each mounted to the chassis on one side and to the wheel axle on the other side, wherein the hydraulic connections of the two hydraulic cylinders are connected crosswise, such that one cylinder is reduced in length when the other is being extended. In this embodiment, in which the centre of rotation of the wheel axle is obtained with only a limited amount of space taken up by the cylinders, the cylinders are prevented from "creeping" in the course of time, resulting in displacement of the wheel axle, and the steering movement of the wheel axle can be effected from a location that can be relatively freely selected. Furthermore, steering of the wheel axle becomes possible practically without any loss in comparison with an embodiment in which the hydraulic cylinders are actuated from a valve block, because it there no longer a need for a throttling action, with the associated throttle losses, in two valves simultaneously, but in one valve at most.

In another advantageous embodiment, at least one of the two hydraulic circuits also comprises a drive unit which drives the cylinders in both directions by causing hydraulic fluid to flow in the circuit. Said drive unit may comprise a driven double-acting hydraulic cylinder, which is mounted in one of the two hydraulic circuits. Said cylinder may be mechanically driven. In this embodiment the hydraulic circuit is also used for providing the steering force, in addition to providing a centre of rotation. The double-acting cylinder makes it possible to realise a relatively low-energy operation.

Finally, an advantageous embodiment is obtained in that the suspension comprises a swivel element. Such a construction is simple in design and, as an alternative to the above-described embodiment comprising two hydraulic cylinders, provides a reliable construction for absorbing reactive forces in the longitudinal direction of the vehicle and for transmitting steering forces.

An advantageous embodiment is obtained if the steering position of the wheel axle is mechanically connected to the steering position of at least one front wheel present in the vehicle. With this, the correct steering position is passed on mechanically without requiring a sensor or a similar relatively vulnerable part. Consequently a still simpler and more robust construction is made possible.

Finally, in a final embodiment of the invention at least one leaf spring exhibits an asymmetric spring resistance in opposite spring directions of movement, in particular a greater spring resistance to upward movement of the wheel axle than to downward movement of the wheel axle relative to the vehicle. As a result of this selection of the spring stiffness, the wheels on the steering wheel axle exhibit an improved road-holding both on and off-road in combination with a good transverse stability of the vehicle.

The invention will now be explained in more detail with reference to the figures below, in which like parts are indicated by the same numerals.

In the drawing:
Figures 1a/b show a part of a chassis provided with a tandem axle of a vehicle according to a first embodiment of the invention, figure 1a showing a top plan view and figure 2 showing a side view; in addition:
Figure 2 shows a part of a second embodiment of the invention in top plan view, viz. the part that is different from the first embodiment as shown in figures 1a/b; and
Figure 3 shows a cross-sectional view of a leaf spring of the embodiment shown in figure 1a/b and a few surrounding parts.

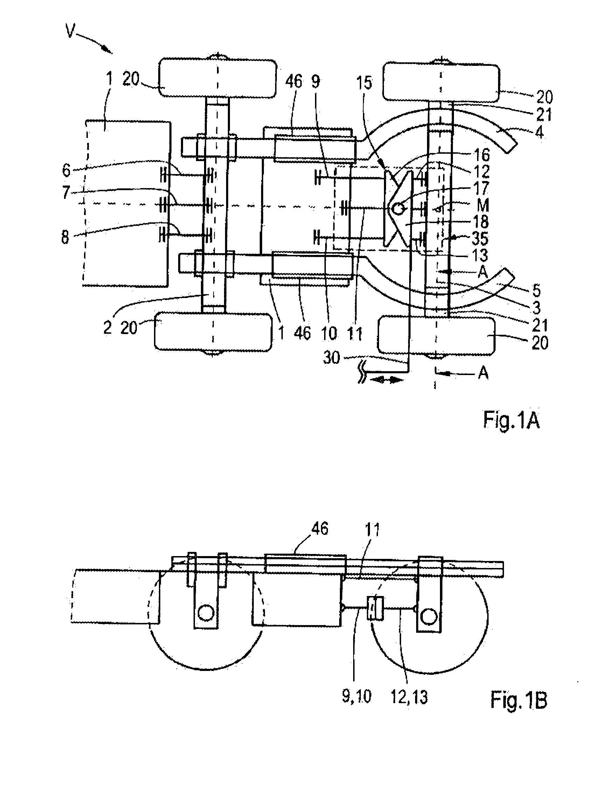

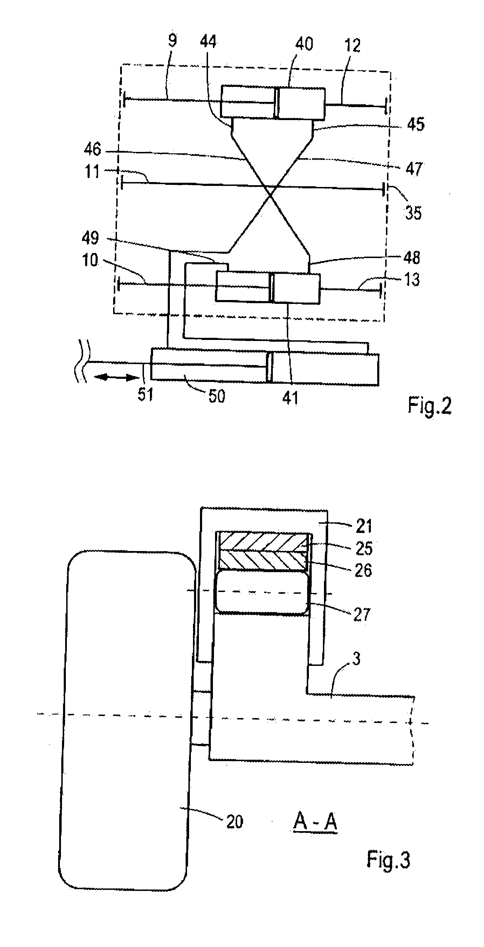

Figure 1a shows part of a vehicle V according to the invention, which comprises a chassis 1 (only partially shown in figure 1a), to which chassis 1 two rigid wheel axles 2, 3 are spring-mounted via two leaf springs 4, 5. In combination with rods 6, 7, 8 between the chassis 1 and the axle 2, the leaf springs 4, 5 as well as fastening means (not shown) form a wheel suspension for the rigid wheel axle 2. In combination with rods 9, 10, 11, rods 12, 13, 14 and a swivel block 15 as well as fastening means (not shown), the leaf springs 4, 5 form a wheel suspension for the rigid wheel axle 3. The leaf springs 4, 5 are supported by the wheel axle 3 and each are shaped as a curved circular segment along part of their length, with a common centre M, which is located at the front of the wheel axle 3 in the illustrated embodiment. The wheel axle 3 is movable perpendicular to its longitudinal direction relative to the two leaf springs 4, 5, i.e. along the curvature of the leaf springs. Said movement can take place in that the wheel axle 3 is attached to the leaf springs 4, 5, engaging around said leaf springs, as is shown in detail in figure 3. Said figure 3 is a sectional view along the line A-A in figure 1a, showing the wheel axle 3, a wheel 20, a guide bracket 21 and a roller 22 which is rotatably mounted in said guide bracket. As figure 3 shows, the leaf spring 5 consists of two leaves 25, 26; the leaf spring 4 also consists of two leaves, which are not separately shown, however.

The swivel block 15 comprises a first swivel member 16 and a second swivel member 18, which is pivotally connected thereto via a pivot pin 17. The first swivel member 16 is vertically attached to the chassis, i.e. in the vertical direction of the vehicle, by means of two rods 9 and 10, which are symmetrically disposed, at a low height, relative to the longitudinal axis of the vehicle V. The second swivel member 18 is vertically attached to the wheel axle by means of 2 rods 12 and 13, which are symmetrically disposed relative to the longitudinal axis of the vehicle V, at about the same height as the rods 9, 10. A rod 11 is disposed at a higher position on the longitudinal axis of the vehicle, between the chassis 1 on the one hand and the wheel axle 3 on the other hand, being capable of pivoting movement about an imaginary horizontal axis that extends transversely to the longitudinal direction of the vehicle V, both at the chassis 1 and at the wheel axle 3. The rod 11 functions to take up reactive forces that occur in the longitudinal direction of the vehicle V, and thus prevents the wheel axle 3 from tilting.

The swivel member 18 is operated by means of a steering mechanism 13 (schematically shown), which is connected to the steering system of the front wheels via a mechanical transmission (not shown). The swivel member 18 transmits steering movements from the steering mechanism 30 to the wheel axle 3 via the rods 12 and 14 (likewise shown in figure 1b).

The rods 9 - 13 and the swivel block 15, partially drawn within a block 35 indicated by a dashed line, jointly fix the centre of the steering movement of the wheel axle in the longitudinal direction of the vehicle V and effect the steering movement of the rigid rear axle 3, in cooperation with the aforesaid steering mechanism 30.

Figure 2 shows a second embodiment of the invention, which is different from the embodiment shown in figures 1a and 1b in that the swivel block 15 illustrated within the dashed block 35 has been substituted for two double-acting hydraulic cylinders 40 and 41.

The hydraulic cylinder 40 has connections 44, 45 which are connected, via hydraulic lines 46, 47, to connections 84 and 89 of the hydraulic cylinder 41, the front connection 44, 49 (seen in relation to the vehicle) of each of said cylinders being connected to the rear connection 45, 48, respectively, of the other cylinder. Retraction (i.e. shortening) of one cylinder will thus result in extension (i.e. lengthening) of the other cylinder. Thus, similar to the embodiment shown in figure 1a/b, the centre of rotation of the wheel axle 3 is fixed at the point M shown in figure 1a in cooperation with the rod 11, without the wheel axle exhibiting the tendency to creep that is occasionally observed in existing wheel axles steered by two hydraulic cylinders via a valve block.

Mounted in the hydraulic line 47 is a third double-acting hydraulic cylinder 50, whose movable piston 51 is actuated. The latter can take place, for example, by means of a mechanical connection with the steering gear (not shown) of the vehicle. The use of the combination of three hydraulic cylinders 40, 41 and 50 has the advantage that a relatively low-loss steering action is obtained in comparison with a system in which the two hydraulic cylinders 40 and 41 are actuated via a valve block, which usually exhibits throttle losses. The use of another system for actuating the hydraulic cylinders 40 and 41 than the illustrated third cylinder 50 is not excluded, however.

Although this is not shown in the figures, the actuation of the hydraulic cylinders may be made dependent on the driving speed of the vehicle. Thus, the steering action of the steered axle can be slowly reduced from a speed of about 30 km/h, for example, until said steering action amounts to zero at a speed of 40 km/h. This can be realised, for example, by incorporating the steering angle sensor in the steering gear of the front wheels, and to activate the two hydraulic cylinders 40 and 41 in a manner that is known per se, for example hydraulically or mechanically, on the basis of the sensors signal.

Finally it is noted that the leaf springs 4, 5 are fixed relative to the chassis 1 in the illustrated embodiment, in that they are clamped between the blocks 46 and 47, respectively, on the one hand and the chassis 1 on the other hand. Said blocks 46, 47 extend some distance beyond the chassis 1, as a result of which the leaf springs 4 and 5 exhibit more spring resistance to upward spring movement of the wheel axle than to downward spring movement of the wheel axle relative to the chassis 1, and thus relative to the vehicle V.

Embodiments other than those shown are possible. Thus, the leaf springs 4, 5 may be connected to the chassis in a manner that allows slight pivoting movement rather than being immovably connected thereto, resulting in a certain connection between the spring movement of the wheels 20 of the two wheel axles 2 and 3.

## Claims

1. A vehicle (V) comprising:
- a chassis (1) provided with a suspension by means of which at least one rigid wheel axle (2, 3) is steerably mounted to the chassis, being capable of spring movement in the vertical direction of the vehicle, wherein
- said suspension comprises at least one leaf spring (4, 5), which leaf spring is supported by the wheel axle (2, 3) in a manner in which the wheel axle is movable in a direction transversely to the longitudinal direction of the wheel axle, in the horizontal plane, relative to the leaf spring, **characterized in that** the leaf spring comprises a part in the form of a curved circular segment having a centre (M) that is located at or near the middle of the wheel axle (3).

2. A vehicle according to claim 1, **characterised in that** the leaf spring (4, 5) is mounted for free spring movement at one of its ends, where it is supported by the wheel axle (3).

3. A vehicle according to claim 1 or claim 2, **characterised in that** said centre (M) is located in front of the wheel axle (3), seen in the usual direction of movement of the vehicle (V).

4. A vehicle according to claim 2 or 3, **characterised in that** the wheel suspension comprises guide means (11) that prevent the wheel axle (3) from moving in its longitudinal direction relative to the circular segments (4, 5).

5. A vehicle according to any one of the preceding claims, **characterised in that** the movement of the wheel axle (3) relative to at least one leaf spring (4, 5) is borne by at least one rotatably disposed roller (22), which forms part of the suspension.

6. A vehicle according to any one of the preceding claims, **characterised in that** the suspension is provided with means (30) that effect the steering movement of the rigid rear axle.

7. A vehicle according to any one of the preceding claims, **characterised in that** the suspension is constructed (11, 16, 17, 18) to fix the centre of the steering movement of the wheel axle in the longitudinal direction of the vehicle.

8. A vehicle according to claim 7, **characterised in that**
- the suspension comprises a pair of double-acting hydraulic cylinders (40, 41),
- which are symmetrically disposed on either side of the longitudinal axis of the vehicle, and
- which are each mounted to the chassis (1) on one side and to the wheel axle (3) on the other side,
- wherein the hydraulic connections (44, 48) of the two hydraulic cylinders (40, 41) are connected crosswise, such that one cylinder is reduced in length when the other is being extended.

9. A vehicle according to claim 8, **characterised in that** at least one of the two hydraulic circuits also comprises a drive unit (50) which drives the cylinders in both directions by causing hydraulic fluid to flow in the circuit.

10. A vehicle according to claim 9, **characterised in that** said drive unit (50) comprises a driven double-acting hydraulic cylinder, which is mounted in one of the two hydraulic circuits.

11. A vehicle according to claim 7, **characterised in that** the suspension comprises a swivel element (18).

12. A vehicle according to any one of the preceding claims, **characterised in that** the steering position of the wheel axle is mechanically connected to the steering position of at least one front wheel present in the vehicle (V).

13. A vehicle according to any one of the preceding claims, **characterised in that** at least one leaf spring (4, 5) exhibits an asymmetric spring resistance in opposite spring directions, and possibly a greater spring resistance to upward movement of the wheel axle (2, 3) than to downward movement of the wheel axle relative to the vehicle.

14. A vehicle according to any one of the preceding claims, **characterised in that** said vehicle is a semitrailer or a trailer, in particular of the articulated type.

## Patentansprüche

1. Fahrzeug (V) Folgendes aufweisend:
- ein Chassis (1), das mit einer Aufhängung versehen ist, mittels welcher mindestens eine starre Radachse (2, 3) lenkbar auf das Chassis montiert und einer Federbewegung in die vertikale Richtung des Fahrzeugs fähig ist, wobei
- die Aufhängung mindestens eine Blattfeder (4, 5) aufweist, wobei die Blattfeder von der Radachse (2, 3) derart getragen wird, dass die Radachse in eine Richtung quer zu der Längsrichtung der Radachse in der horizontalen Ebene in Bezug zu der Blattfeder beweglich ist, **dadurch gekennzeichnet, dass** die Blattfeder einen Teil in der Form eines gebogenen kreisförmigen Segments aufweist, das eine Mitte (M) hat, die sich in der Mitte oder in der Nähe der Mitte der Radachse (3) befindet.

2. Fahrzeug nach Anspruch 1, **dadurch gekennzeichnet, dass** die Blattfeder (4, 5) zur freien Federbewegung an einem ihrer Enden, an dem sie von der Radachse (3) gestützt wird, montiert ist.

3. Fahrzeug nach Anspruch 1 oder 2, **dadurch gekennzeichnet, dass** die Mitte (M) vor der Radachse (3), in die übliche Bewegungsrichtung des Fahrzeugs (V) gesehen liegt.

4. Fahrzeug nach Anspruch 2 oder 3, **dadurch gekennzeichnet, dass** die Radaufhängung Führungsmittel (11) aufweist, die die Radachse (3) daran hindern, sich in ihrer Längsrichtung in Bezug zu den kreisförmigen Segmenten (4, 5) zu bewegen.

5. Fahrzeug nach einem der vorhergehenden Ansprüche, **dadurch gekennzeichnet, dass** die Bewegung der Radachse (3) in Bezug zu mindestens einer Blattfeder (4, 5) von wenigstens einer drehbar angeordneten Rolle (22) getragen wird, die einen Teil der Aufhängung bildet.

6. Fahrzeug nach einem der vorhergehenden Ansprüche, **dadurch gekennzeichnet, dass** die Aufhängung mit Mitteln (30) versehen ist, die die Steuerbewegung der starren Heckachse ausführen.

7. Fahrzeug nach einem der vorhergehenden Ansprüche, **dadurch gekennzeichnet, dass** die Aufhängung gebaut (11, 16, 17, 18) ist, um die Mitte der Steuerbewegung der Radachse in die Längsrichtung des Fahrzeugs zu fixieren.

8. Fahrzeug nach Anspruch 7, **dadurch gekennzeichnet, dass**
- die Aufhängung ein Paar doppelt wirkende hydraulische Zylinder (40, 41) aufweist,
- die symmetrisch auf jeder Seite der Längsachse des Fahrzeugs angeordnet sind, und
- die jeweils an das Chassis (1) auf einer Seite und auf der anderen Seite an der Radachse (3) montiert sind,
- wobei die hydraulischen Verbindungen (44, 48) der zwei hydraulischen Zylinder (40, 41) gekreuzt verbunden sind, so dass ein Zylinder in der Länge verringert wird, wenn der andere gestreckt wird.

9. Fahrzeug nach Anspruch 8, **dadurch gekennzeichnet, dass** mindestens einer der zwei hydraulischen Kreisläufe auch eine Antriebseinheit (50) aufweist, die die Zylinder in beide Richtungen antreibt, indem sie hydraulische Flüssigkeit veranlasst, in die Kreisläufe zu fließen.

10. Fahrzeug nach Anspruch 9, **dadurch gekennzeichnet, dass** die Antriebseinheit (50) einen angetriebenen doppelt wirkenden hydraulischen Zylinder aufweist, der auf einem der zwei hydraulischen Kreisläufe montiert ist.

11. Fahrzeug nach Anspruch 7, **dadurch gekennzeichnet, dass** die Aufhängung ein Schwenkelement (18) aufweist.

12. Fahrzeug nach einem der vorhergehenden Ansprüche, **dadurch gekennzeichnet, dass** die Steuerposition der Radachse mechanisch mit der Steuerposition mindestens eines Vorderrads, das in dem Fahrzeug (V) vorhanden ist, verbunden ist.

13. Fahrzeug nach einem der vorhergehenden Ansprüche, **dadurch gekennzeichnet, dass** die mindestens eine Blattfeder (4, 5) einen asymmetrischen Federwiderstand in entgegengesetzte Federrichtungen aufweist und eventuell einen größeren Federwiderstand gegen Aufwärtsbewegung der Radachse (2, 3) als gegen Abwärtsbewegung der Radachse in Bezug zu dem Fahrzeug.

14. Fahrzeug nach einem der vorhergehenden Ansprüche, **dadurch gekennzeichnet, dass** das Fahrzeug ein Anhänger oder Auflieger insbesondere des Gelenkstyps ist.

## Revendications

1. Véhicule (V) comprenant :
- un châssis (1) doté d'une suspension au moyen de laquelle au moins un essieu rigide (2, 3) est monté de manière à pouvoir être dirigé sur le châssis, étant capable d'un mouvement de ressort dans le sens vertical du véhicule, dans lequel
- la suspension comprend au moins un ressort à lames (4, 5), lequel ressort à lames est supporté par l'essieu (2, 3), d'une manière dans laquelle l'essieu peut se déplacer dans une direction transversale à la direction longitudinale de l'essieu, dans le plan horizontal, par rapport au ressort à lames, **caractérisé en ce que** le ressort à lames comprend une partie sous forme d'un segment circulaire incurvé présentant un centre (M) qui est situé sur ou près du milieu de l'essieu (3).

2. Véhicule selon la revendication 1, **caractérisé en ce que** le ressort à lames (4, 5) est monté pour un mouvement libre de ressort sur une de ses extrémités, où il est supporté par l'essieu (3).

3. Véhicule selon la revendication 1 ou 2, **caractérisé en ce que** le centre (M) est situé devant l'essieu (3), vu dans le sens habituel de mouvement du véhicule (V).

4. Véhicule selon la revendication 2 ou 3, **caractérisé en ce que** la suspension de roue comprend des moyens de guidage (11) qui évitent que l'essieu (3) ne se déplace dans sa direction longitudinale par rapport aux segments circulaires (4, 5).

5. Véhicule selon l'une quelconque des revendications précédentes, **caractérisé en ce que** le mouvement de l'essieu (3) par rapport à au moins un ressort à lames (4, 5) est porté par au moins un galet (22) disposé de manière rotative qui fait partie de la suspension.

6. Véhicule selon l'une quelconque des revendications précédentes, **caractérisé en ce que** la suspension est dotée de moyens (30) qui effectuent le mouvement de direction de l'essieu arrière rigide.

7. Véhicule selon l'une quelconque des revendications précédentes, **caractérisé en ce que** la suspension est construite (11, 16, 17, 18) pour fixer le centre du mouvement de direction de l'essieu dans la direction longitudinale du véhicule.

8. Véhicule selon la revendication 7, **caractérisé en ce que**
- la suspension comprend une paire de vérins hydrauliques à double action (40, 41),
- qui sont disposés symétriquement de chaque côté de l'axe longitudinal du véhicule, et
- qui sont montés chacun sur le châssis (1) sur un côté, et sur l'essieu (3) sur l'autre côté,
- dans lequel les connexions hydrauliques (44, 48) des deux vérins hydrauliques (40, 41) sont reliées de manière transversale, de telle sorte qu'un cylindre est réduit en longueur lorsque l'autre est étendu.

9. Véhicule selon la revendication 8, **caractérisé en ce qu'**au moins l'un des circuits hydrauliques comprend également une unité de commande (50) qui dirige les vérins dans els deux directions en faisant circuler le fluide hydraulique dans le circuit.

10. Véhicule selon la revendication 9, **caractérisé en ce que** l'unité de commande (50) comprend un vérin hydraulique à double action entraîné qui est monté dans l'un des deux circuits hydrauliques.

11. Véhicule selon la revendication 7, **caractérisé en ce que** la suspension comprend un élément de rotule (18).

12. Véhicule selon l'une quelconque des revendications précédentes, **caractérisé en ce que** la position de direction de l'essieu est reliée mécaniquement à la position de direction d'au moins une roue avant présente dans le véhicule (V).

13. Véhicule selon l'une quelconque des revendications précédentes, **caractérisé en ce qu'**au moins un ressort à lames (4, 5) présente une résistance de ressort asymétrique dans des directions opposées du ressort, et peut-être une résistance de ressort plus grande au mouvement ascendant de l'essieu (2, 3) qu'au mouvement descendant de l'essieu par rapport au véhicule.

14. Véhicule selon l'une quelconque des revendications précédentes, **caractérisé en ce que** le véhicule est un semi-remorque ou une remorque, en particulier du type articulé.
